# FASCICULE DE BREVET EUROPEEN

(11) **EP 1 349 777 B1**
(45) Date de publication et mention de la délivrance du brevet: **26.10.2005**
(21) Numéro de dépôt: 01999509.1
(22) Date de dépôt: 03.12.2001
(51) Int. Cl.: B64C 1/00

(54) **POUTRE COMPOSITE A INITIATEUR DE RUPTURE INTEGRE ET FUSELAGE D'AERONEF INTEGRANT DE TELLES POUTRES**
VERBUNDTRÄGER MIT INTEGRIERTEM SOLLBRUCHINITIATOR UND SOLCHE TRÄGER ENTHALTENDER FLUGZEUGRUMPF
COMPOSITE BEAM WITH INTEGRATED BREAK-OFF INITIATOR AND AIRCRAFT FUSELAGE INCORPORATING SUCH BEAMS

(30) Priorité: 04.12.2000 FR 0015672
(43) Date de publication de la demande: 08.10.2003
(73) Titulaire: AIRBUS France, 31060 Toulouse Cedex 03 (FR)
(72) Inventeur: BERAL, Bruno, F-31750 ESCALQUENS (FR); SOUQUET, Jean-Marc, F-31400 TOULOUSE (FR)
(74) Mandataire: Poulin, Gérard
(86) Numéro de dépôt international: PCT/FR2001/003809
(87) Numéro de publication internationale: WO 2002/046036

(56) Documents cités:
- US-A- 4 593 870
- US-A- 4 734 146
- US-A- 5 069 318
- US-A- 6 080 463
- W. LESTARI ET AL.: "Development of a triger mechanism to reduce peak forces in crash loaded composite sine-wave spars" 20TH EUROPEAN ROTORCRAFT FORUM, 4 - 7 octobre 1994, pages 1-15, XP001020746 Amsterdam cité dans la demande

## Description

### Domaine technique

L'invention concerne une poutre composite conçue pour absorber de façon contrôlée un effort de compression intense et brutal appliqué dans la direction de sa hauteur, sous l'effet de l'énergie cinétique produite par un choc violent tel que le crash d'un aéronef.

Une poutre conforme à l'invention peut être utilisée dans tous les cas où la structure qui l'intègre risque de subir un choc violent nécessitant une absorption d'énergie contrôlée.

Une application privilégiée de l'invention concerne les poutres utilisées dans les cellules aéronautiques, et notamment les poutres qui relient le revêtement extérieur d'un fuselage d'aéronef à la partie basse, horizontale, des cadres de renfort sur lesquels est fixé ce revêtement.

L'invention concerne également un fuselage d'aéronef intégrant au moins deux poutres de ce type.

### Art antérieur

Les structures de fuselage des aéronefs comprennent des cadres de renfort régulièrement répartis sur toute la longueur du fuselage et sur lesquels est fixé un revêtement extérieur.

Les cadres de renfort ont une forme sensiblement circulaire ou ovoïde, sauf dans leur partie basse, qui est généralement droite et horizontale, de façon à pouvoir supporter un plancher.

La liaison entre le revêtement extérieur du fuselage et les parties basses horizontales des cadres est habituellement assurée par des poutres, qui s'étendent sensiblement parallèlement à l'axe longitudinal de l'aéronef. Ces poutres peuvent notamment être au nombre de deux. Elles présentent une section en I ou en T inversé. Dans les aéronefs les plus récents, elles sont fréquemment réalisées en matériaux composites.

Dans un document intitulé "Development of a trigger mechanism to reduce peak forces in crash loaded composite sine-wave spars", présenté au "20^{th} European Rotorcraft Forum" d'Amsterdam des 4-7 octobre 1994 et publié sous la référence NLR TP 94319 U par le "National Aircraft Laboratory NLR", Amsterdam, Pays Bas, W. Lestari, H.G.S.J. Thuis et J.F.M. Wiggenraad ont étudié le comportement de poutres composites destinées à supporter un plancher dans un hélicoptère militaire, en cas de crash de celui-ci.

Dans certaines des configurations décrites, les poutres présentent une section en forme de I. Elles comprennent alors une semelle supérieure, une semelle inférieure et une âme reliant les deux semelles selon une direction verticale qui coïncide avec la direction d'application des efforts de compression, en cas de crash.

Plus précisément, dans cette configuration particulière, l'âme de la poutre présente une section horizontale en forme de sinusoïde et comprend un empilement dont la partie centrale est formée de nappes de fibres de carbone unidirectionnelles, orientées dans la direction des efforts de compression, c'est-à-dire verticalement. La partie extérieure de l'empilement est formée de tissus hybrides de fibres de carbone et de fibres aramides. La haute résistance et la dureté des fibres de carbone leur permettent d'absorber l'énergie engendrée par le crash. L'élasticité des fibres aramides préserve l'intégrité de la poutre après le crash et confine les morceaux de fibres de carbone.

La publication précitée propose également différentes solutions pour déclencher, de façon contrôlée, la rupture de la poutre dans sa partie basse en cas de crash. Ce déclenchement contrôlé a pour but de mieux répartir les charges de compression en cas de crash, sans réduire sensiblement la résistance au cisaillement de la poutre dans les conditions normales de fonctionnement.

Cependant, les solutions proposées dans ce document pour initier la rupture de la poutre ne sont pas totalement satisfaisantes. En particulier, elles ne sont pas adaptées à des avions de transport civil, dans lesquels les niveaux d'accélération doivent rester compatibles avec les tolérances humaines, pour garantir la survie des passagers.

### Exposé de l'invention

L'invention a précisément pour objet une poutre composite intégrant des moyens initiateurs de rupture dont la conception originale permet notamment d'utiliser la poutre sur un avion de transport civil en engendrant, en cas de crash, des niveaux d'accélération qui restent compatibles avec les tolérances humaines.

Conformément à l'invention, ce résultat est obtenu au moyen d'une poutre composite conforme à la revendication 1.

Une poutre composite ainsi constituée est apte à absorber l'énergie cinétique générée lors d'un crash, par des dégradations structurales programmées initiées dans la partie basse de la poutre. Les moyens initiateurs déclenchent la rupture par la propagation d'un front d'écrasement. Celui-ci est activé par une concentration de contraintes et se propage ensuite sur toute la hauteur de la poutre. Plus précisément, la présence des découpes dans le bord inférieur des nappes de fibres unidirectionnelles permet d'initier progressivement la rupture. On minimise ainsi le pic d'effort initial et les niveaux d'accélération, qui restent ainsi compatibles avec les tolérances humaines. De même, l'agencement selon l'invention permet de diriger l'écrasement pendant la ruine de la poutre.

Selon un mode de réalisation préféré de l'invention, la semelle est rapportée de part et d'autre de l'âme de la poutre par des films de colle. Ces films de colle font alors également partie des moyens initiateurs de rupture intégrés à la poutre. En cas de crash, ils se rompent par cisaillement lors d'une première phase d'initiation de la rupture de la poutre.

De préférence, la semelle comprend alors deux cornières qui sont rapportées de part et d'autre de l'âme de la poutre par les films de colle.

Dans le mode de réalisation préféré de l'invention, le bord de chaque nappe de fibres unidirectionnelles adjacent à la semelle est situé en retrait par rapport aux bords correspondants des tissus. Ce retrait du bord inférieur de chacune des nappes fait alors également partie des moyens initiateurs de rupture. En cas de crash, le retrait des nappes de fibres unidirectionnelles conduit à un écrasement des parties inférieures des tissus, lors d'une deuxième phase d'initiation de la rupture de la poutre. Cette deuxième phase fait alors suite à la phase de cisaillement des films de colle et précède la rupture de la partie basse, échancrée, des nappes de fibres unidirectionnelles.

Du fait que les découpes formées dans chaque nappe de fibres unidirectionnelles ont la forme de dents de scie, le bord inférieur des nappes comporte des pointes qui favorisent l'initiation progressive de la rupture.

Dans le mode de réalisation préféré de l'invention, l'angle au sommet des dents de scie est égal à environ 30°.

Avantageusement, les pointes des dents de scie sont alors décalées au maximum par rapport à l'axe de la sinusoïde formée par l'âme de la poutre.

Lorsque les échancrures sont en forme de dents de scie, au plus environ 20% de la surface des dents est située en face de la semelle de la poutre.

De préférence, la ou les nappes de fibres unidirectionnelles sont formées de fibres de carbone.

Dans le mode de réalisation préféré de l'invention, les tissus comprennent des tissus de fibres aramides orientées à ± 45° par rapport à la direction de la hauteur de la poutre.

Dans ce cas, la ou les nappes de fibres de carbone unidirectionnelles forment une partie centrale de l'âme de la poutre. Cette partie centrale est alors placée entre deux tissus de fibres aramides, de telle sorte que chaque nappe est en contact avec au moins un de ceux-ci.

De plus les tissus comprennent de préférence des tissus de fibres de carbone orientées à ± 45° par rapport à la direction de la hauteur de la poutre.

Dans ce cas, les tissus de fibres de carbone sont placés avantageusement sur les faces extérieures de l'âme de la poutre.

L'invention a aussi pour objet un fuselage d'aéronef, comprenant une ossature et un revêtement extérieur fixé sur celle-ci, l'ossature comportant des cadres de renfort dont une partie inférieure sensiblement rectiligne est reliée au revêtement extérieur par au moins deux poutres réalisées de la manière qui vient d'être définie.

### Brève description des dessins

On décrira à présent, à titre d'exemple non limitatif, un mode de réalisation préféré de l'invention, en se référant aux dessins annexés, dans lesquels :
- la figure 1 est une vue en perspective, représentant schématiquement la partie basse d'un tronçon d'ossature de fuselage d'aéronef intégrant deux poutres réalisées conformément à l'invention ;
- la figure 2 est une vue en perspective représentant à plus grande échelle l'une des poutres du tronçon d'ossature illustré sur la figure 1 ;
- la figure 3 est une vue en coupe transversale de la partie basse de la poutre représentée sur la figure 2 ; et
- la figure 4 montre, en partie haute, la forme des découpes réalisées dans le bord inférieur des nappes de fibres unidirectionnelles et, en partie basse, la sinusoïde formée en section horizontale par l'âme de la poutre, de façon à illustrer la position relative des dents de scie des nappes par rapport aux ondulations de l'âme.

### Exposé détaillé d'un mode de réalisation préféré de l'invention

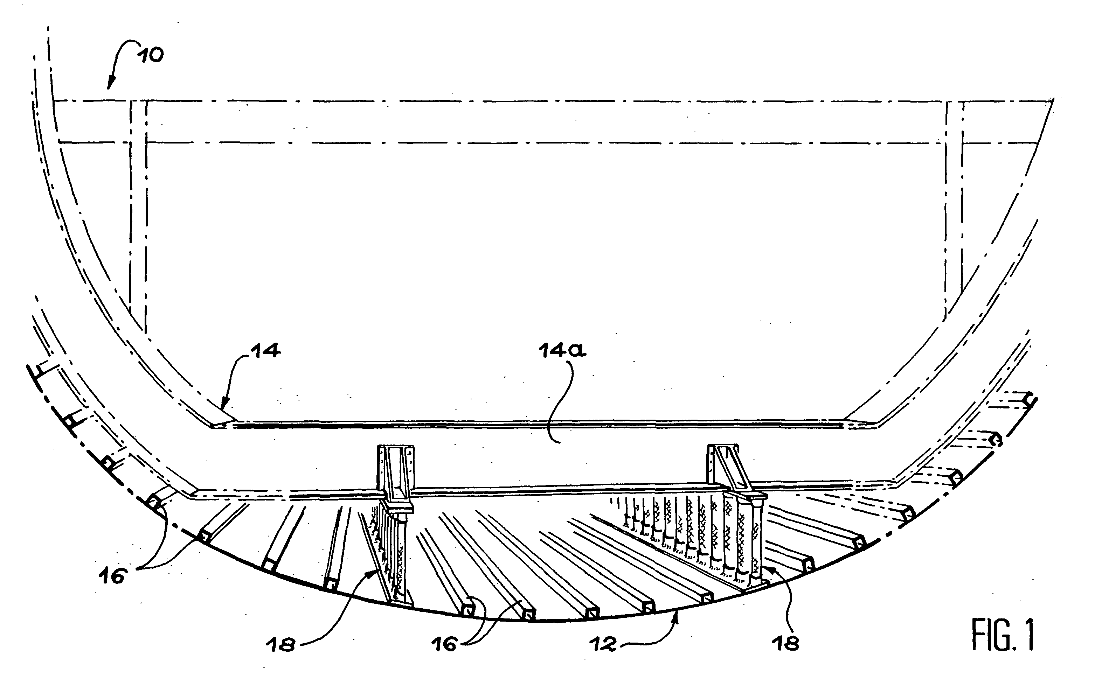

Comme l'illustre schématiquement la figure 1, le fuselage d'un aéronef comprend une ossature 10 sur laquelle est fixé un revêtement extérieur 12. L'invention est particulièrement adaptée au cas d'un avion de transport civil. Toutefois, il est à noter que le fuselage représenté très partiellement sur la figure 1 peut être celui de tout type d'aéronef, sans sortir du cadre de l'invention.

L'ossature 10 du fuselage est formée principalement de cadres de renfort 14, reliés entre eux par des lisses 16. Les, cadres de renfort 14 sont régulièrement répartis sur toute la longueur du fuselage. Chacun d'entre eux est disposé selon une section du fuselage et présente globalement une forme sensiblement circulaire ou ovoïde. Toutefois, la partie basse 14a des cadres de renfort 14 est habituellement droite et horizontale, de façon à pouvoir supporter un plancher (non représenté) tel que le plancher d'un compartiment à bagages.

Dans la partie inférieure du fuselage, située entre les parties basses 14a des cadres de renfort 14 et le revêtement 12, l'ossature 10 comprend deux poutres 18. Bien entendu, le nombre de poutres 18 pourrait être différent, par exemple de trois ou de quatre, sans sortir du cadre de l'invention.

Les poutres 18 s'étendent parallèlement à l'axe longitudinal de l'aéronef, c'est-à-dire selon une direction sensiblement horizontale lorsque l'assiette de l'aéronef est elle-même horizontale.

Chacune des poutres 18 présente en section, selon un plan vertical, approximativement la forme d'un I. Dans une variante de réalisation non représentée mais rentrant dans le cadre de l'invention, les poutres 18 peuvent également présenter une section en forme de T inversé.

Conformément à l'invention, les poutres présentent une structure particulière, qui leur permet d'initier leur rupture en partie basse, de façon contrôlée, lorsque la poutre est soumise à un effort de compression intense et brutal appliqué dans le sens de sa hauteur, c'est-à-dire sensiblement verticalement dans l'application décrite. Cette situation se produit dans certains types de crash tels qu'un amerrissage d'urgence. L'homme du métier comprendra aisément que l'application sur une poutre d'un tel effort de compression peut avoir des causes sensiblement différentes lorsque la poutre est intégrée dans une structure autre qu'une ossature de fuselage d'aéronef. En d'autres termes, une poutre conforme à l'invention peut avoir des applications sensiblement différentes et, par exemple, être intégrée dans un véhicule terrestre, sur un navire ou dans une machine de toute autre nature.

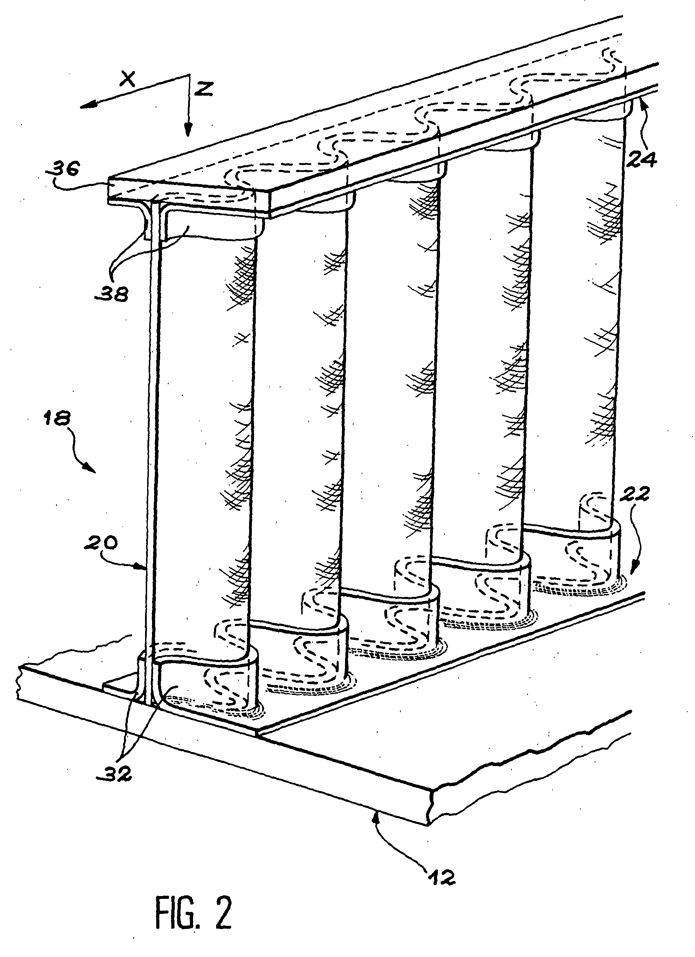

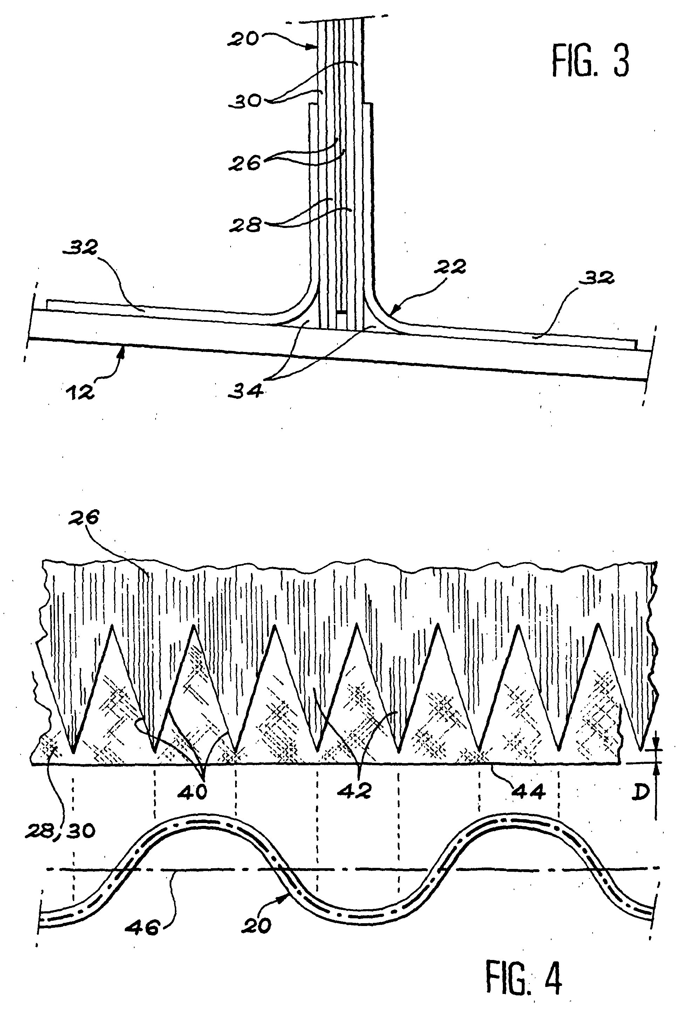

Comme l'illustrent en particulier les figures 2 et 3, une poutre 18 conforme à l'invention comprend une âme 20, une semelle inférieure 22 et, dans le mode de réalisation représenté qui concerne une poutre à section en forme de I, une semelle supérieure 24. Il est à noter que cette dernière semelle n'existe pas lorsque la poutre présente une section en forme de T inversé.

Comme le montrent notamment la figure 2 et la partie basse de la figure 4, l'âme 20 de la poutre 18 présente la forme d'une sinusoïde, lorsqu'elle est observée en coupe selon un plan perpendiculaire à la direction de sa hauteur, c'est-à-dire selon un plan horizontal dans l'application décrite. Le profil sinusoïdal de l'âme 20 est formé par une succession de segments circulaires de rayon constant et d'angle d'ouverture également constant. Ce profil stabilise la poutre 18 lorsqu'elle est soumise à un effort de compression dans le sens de sa hauteur, lors de l'impact et pendant l'écrasement consécutifs à un crash.

La poutre 18 est réalisée en matériau composite. Ainsi, l'âme 20 est constituée par un empilement de plis. Plus précisément, cet empilement comprend au moins une nappe 26 de fibres de carbone unidirectionnelles, formant une partie centrale de l'âme 20, des tissus aramides 28 placés de part et d'autre de cette partie centrale et des tissus 30 de fibres de carbone placés sur les faces extérieures de l'âme de la poutre.

Dans le mode de réalisation illustré sur la figure 3, l'âme 20 de la poutre 18 comprend deux nappes 26 de fibres de carbone unidirectionnelles, deux tissus aramides 28 et deux tissus 30 de fibres de carbone. Cet agencement permet de garantir que chacune des nappes 26 de fibres de carbone unidirectionnelles soit en contact avec un tissu 28 de fibres aramides.

L'agencement des nappes 26 de fibres de carbone unidirectionnelles dans l'âme 20 de la poutre 18 est tel que lesdites fibres sont orientées dans la direction de la hauteur de la poutre, c'est-à-dire verticalement dans le mode de réalisation décrit. Cette orientation correspond à la direction d'application des efforts de traction et de compression qui sont supportés par la poutre lorsqu'elle est intégrée dans l'ossature du fuselage de l'aéronef. Elle permet aux fibres de carbone de transmettre ces efforts dans les conditions normales d'utilisation et d'absorber la majeure partie de l'énergie cinétique générée lors d'un crash.

Les tissus aramides 28 qui encadrent les nappes 26 de fibres de carbone unidirectionnelles sont constitués de fibres orientées à ± 45° par rapport à la direction de la hauteur de la poutre, c'est-à-dire à la verticale dans le mode de réalisation décrit. Ces tissus améliorent la rigidité de l'âme de la poutre. Ils permettent aussi de fixer et de confiner localement les éclats de fibres de carbone et, en combinaison avec les tissus 30 de fibres de carbone, de stabiliser les nappes 26 de fibres de carbone unidirectionnelles lorsque celles-ci sont soumises à des efforts de compression dans la direction précitée.

Les tissus 30 de fibres de carbone qui forment les faces extérieures de l'âme 20 de la poutre 18 sont constituées de fibres de carbone orientées à ± 45° par rapport à la direction de la hauteur de la poutre, c'est-à-dire à la verticale dans le mode de réalisation décrit. Ces tissus contribuent à la stabilisation des nappes 26 de fibres de carbone unidirectionnelles, lorsque celles-ci sont soumises à des efforts de compression dans ladite direction.

La semelle inférieure 28 comprend deux cornières 32, présentant l'une et l'autre une section transversale en forme de V. Les cornières 32 sont placées de part et d'autre de l'âme 26 de la poutre, de façon à assurer la liaison entre ladite âme et le revêtement extérieur 12.

Chacune des cornières 32 est constituée par un empilement de tissus de fibres de carbone. Par exemple, chaque cornière peut comprendre deux tissus de fibres de carbone superposés. Les fibres de carbone contenues dans ces tissus sont avantageusement orientées à 0° et à 90° par rapport à la direction longitudinale de la poutre 18.

L'aile de chacune des cornières 32 prévue pour être fixée au revêtement extérieur 12 épouse le profil de celui-ci. Au contraire, l'aile de chaque cornière 32 prévue pour être fixée à l'âme 20 de la poutre 18 a une section longitudinale en forme de sinusoïde, comparable à celle de l'âme 20. L'angle formé entre les deux ailes des cornières 32 dépend de la position géographique de la poutre 20 dans le fuselage. Il peut être droit, aigu ou obtus.

La fixation des cornières 32 sur l'âme 20 de la poutre est effectuée par collage à chaud, par l'intermédiaire de ceux films de colle, de part et d'autre de l'âme. Une résine de remplissage 34 remplit les interstices entre les semelles et le revêtement extérieur.

La semelle supérieure 24 comprend une plaque 36 plane et horizontale et deux cornières 38 disposées de part et d'autre de l'âme 20 de la poutre. La plaque plane 36 est constituée par un empilement de nappes de fibres de carbone. Le nombre de ces nappes est fonction de la rigidité recherchée. Les cornières 38 présentent des caractéristiques comparables à celles des cornières 32 de la semelle inférieure 22. Toutefois, elles sont généralement constituées de trois tissus de fibres de carbone et l'angle formé entre les ailes de chacune des cornières est un angle droit.

Conformément à l'invention et comme on va à présent le décrire en détail en se référant à la figure 4, la poutre 18 intègre, dans sa partie inférieure, des moyens initiateurs de rupture. Ces moyens sont conçus pour amorcer une dégradation échelonnée de la poutre, dans la partie inférieure de l'âme de celle-ci, tout en assurant sa stabilité, lors d'un crash éventuel.

Les moyens initiateurs de rupture selon l'invention, comprennent tout d'abord des découpes 40 réalisées dans le bord inférieur de chacune des nappes 26 de fibres de carbone unidirectionnelles, c'est-à-dire sur le bord des nappes adjacent à la semelle inférieure 22. Les découpes 40 forment des dents de scie régulièrement réparties sur le bord inférieur de chacune des nappes 26. Ces dents de scie sont toutes identiques et matérialisent des pointes 42, tournées vers le bas et dont chacune a la forme d'un triangle isocèle. L'angle au sommet de ce triangle isocèle est de préférence égal à environ 30°.

Comme l'illustre en particulier la figure 4, la hauteur des pointes 42 est choisie afin que le pas des dents de scie soit différent de celui de la sinusoïde formée par l'âme 20 de la poutre 18. Plus précisément, le pas des dents de scie est un sous-multiple de celui de la sinusoïde formée par l'âme 20 (un rapport de 1 sur 4 est représenté sur la figure 4). En outre, les pointes 42 sont décalées au maximum par rapport à l'axe 46 de la sinusoïde, afin que les parties extérieures des ondulations formées par l'âme 20 de la poutre coïncident avec le fond des découpes 40.

De préférence, les découpes 40sont suffisamment échancrées pour que la majeure partie de la surface des pointes 42 se situe au-dessus des bords supérieurs des cornières 32. Plus précisément, au plus environ 20% de la surface des dents de scie est située en face des cornières 32 formant la semelle inférieure 22.

Selon une autre caractéristique des moyens initiateurs de rupture, le bord inférieur de chacune des nappes 26 de fibres de carbone unidirectionnelles est décalé vers le haut, c'est-à-dire situé en retrait, par rapport au bord inférieur des tissus 28 et 30. Ce décalage correspond à la distance D entre les extrémités des pointes 42 et le bord inférieur 44 des tissus 28 et 30 sur la figure 4.

Les moyens initiateurs de rupture comprennent également les films de colle qui sont interposés entre les cornières 32 de la semelle inférieure 22 et l'âme 20 de la poutre 18.

Lorsqu'une poutre 18 intégrant les moyens initiateurs de rupture qui viennent d'être décrits est soumise à des efforts de compression dans le sens de sa hauteur consécutivement à un crash, l'initiation de la rupture se déroule en plusieurs étapes. Cette caractéristique permet de minimiser le pic d'effort initial.

La première étape consiste en une rupture du film de colle formant l'interface entre l'âme 20 de la poutre 18 et les cornières 32 de la semelle inférieure 22, par cisaillement. Le film de colle joue ainsi le rôle d'un fusible entre l'âme de la poutre et la semelle inférieure, qui est elle-même fixée au revêtement extérieur 12. Le cisaillement peut intervenir sous l'action combinée d'efforts dans le sens longitudinal X et dans le sens de la hauteur Z de la poutre 18.

Lors de la deuxième étape de la rupture, les parties inférieures des tissus 28 et 30, situées en dessous des pointes 42 des nappes 26 de fibres de carbone unidirectionnelles, s'écrasent quand la poutre arrive.en contact avec le sol.

L'étape suivante se caractérise par la rupture des pointes 42 des nappes 26 de fibres unidirectionnelles. Les découpes 40 permettent de charger et de dégrader progressivement les nappes, qui possèdent la plus grande rigidité en compression. La poutre 18 s'écrase ensuite sur toute sa hauteur.

Les poutres 18 conformes à l'invention sont fabriquées en deux étapes.

La première étape consiste à réaliser l'âme 20, par drapage, sur un poinçon de forme sinusoïdale. Les bords inférieurs des nappes 26 de fibres de carbone unidirectionnelles sont préalablement découpés en dents de scie, pour former les dents 42. Le drapage est suivi d'une polymérisation en autoclave, l'empilement de nappes et de tissus étant placé entre le poinçon et une vessie étanche.

La deuxième étape permet d'adjoindre à l'âme 20 de la poutre 18 les semelles inférieure 22 et supérieure 24. Les cornières 32 et 38 pré polymérisées et la plaque plane 36 sont rapportées à la peau 20 en une seule opération, qui est suivie d'une deuxième polymérisation en autoclave. La cuisson assure la liaison entre les cornières et l'âme par l'adjonction des films de colle situés à l'interface entre ces éléments, tandis que la plaque plane 36 est polymérisée.

En plus des nombreux avantages déjà mentionnés, il est à noter que l'empilement de plis de matériaux de différentes natures constituant l'âme 20 de la poutre apporte une bonne absorption d'énergie en minimisant la masse structurale.

## Revendications

1. Poutre composite susceptible d'être soumise, dans la direction de sa hauteur, à un effort de compression apte à provoquer sa rupture, la poutre (18) comprenant une âme (20) ayant une section sensiblement en forme de sinusoïde dans un plan perpendiculaire à ladite direction et une semelle (22) adaptée pour relier l'âme (20) à une structure (12) d'application de l'effort de compression, l'âme (20) comportant un empilement d'au moins une nappe (26) de fibres unidirectionnelles orientées selon ladite direction et de tissus (28, 30), la poutre (18) comprenant des moyens initiateurs de rupture, de façon à charger et à dégrader progressivement la nappe (26) lors de l'application dudit effort de compression **caractérisée en ce que** lesdits moyens initiateurs de rupture comportent des découpes (40) formées sur un bord, adjacent à la semelle (22), de chaque nappe (26) de fibres unidirectionnelles dans laquelle les découpes (40) ont la forme de dents de scie régulièrement réparties sur le bord de chaque nappe (26) de fibres unidirectionnelles selon un pas sous-multiple de celui de la sinusoïde formée en section par l'âme (20) de la poutre (18).

2. Poutre composite selon la revendication 1, dans laquelle la semelle (22) est rapportée de part et d'autre de l'âme (20) par des films de colle, les moyens initiateurs de rupture comportant également lesdits films de colle.

3. Poutre composite selon la revendication 2, dans laquelle la semelle (22) comprend deux cornières (32) rapportées de part et d'autre de l'âme (20) par lesdits films de colle.

4. Poutre composite selon l'une quelconque des revendications 1 à 3, dans laquelle ledit bord de chaque nappe (26) de fibres unidirectionnelles est situé en retrait par rapport à des bords correspondants (44) des tissus (28, 30), les moyens initiateurs de rupture comportant également ledit retrait (D).

5. Poutre composite selon l'une quelconque des revendications 1 à 4, dans laquelle les dents de scie ont un angle au sommet d'environ 30°.

6. Poutre composite selon l'une quelconque des revendications 1 à 5, dans laquelle les pointes (42) des dents de scies sont décalées au maximum par rapport à l'axe (46) de ladite sinusoïde.

7. Poutre composite selon l'une quelconque des revendications 1 à 6, dans laquelle au plus environ 20% de la surface des dents de scie est située en face de la semelle (22).

8. Poutre composite selon l'une quelconque des revendications 1 à 7, dans laquelle chaque nappe (26) de fibres unidirectionnelles est formée de fibres de carbone.

9. Poutre composite selon l'une quelconque des revendications 1 à 9, dans laquelle les tissus comprennent des tissus (28) de fibres aramides orientées à ± 45° par rapport à ladite direction.

10. Poutre composite selon les revendications 8 et 9 combinées, dans laquelle la ou les nappes (26) de fibres de carbone unidirectionnelles forment une partie centrale de l'âme (20) de la poutre (18), ladite partie centrale étant placée entre deux tissus (26) de fibres aramides, de telle sorte que chaque nappe (26) est en contact avec au moins un de ceux-ci.

11. Poutre composite selon l'une quelconque des revendications 1 à 10, dans laquelle les tissus comprennent des tissus (30) de fibres de carbone orientées à ± 45° par rapport à ladite direction.

12. Poutre composite selon la revendication 11, dans laquelle les tissus (30) de fibres de carbone sont placés sur les faces extérieures de l'âme (20) de la poutre (18).

13. Fuselage d'aéronef, comprenant une ossature (10) et un revêtement extérieur (12) fixé sur celle-ci, l'ossature (10) comportant des cadres de renfort (14) dont une partie inférieure (14a) sensiblement rectiligne est reliée au revêtement extérieur (12) par au moins deux poutres (18) réalisées selon l'une quelconque des revendications 1 à 12.

## Patentansprüche

1. Verbundträger, der in Richtung seiner Höhe einer Druckkraft ausgesetzt werden kann, die seinen Bruch hervorrufen kann, wobei der Träger (18) einen Kern (20) mit einem Abschnitt von im wesentlichen Sinusform in einer Ebene senkrecht zu der genannten Richtung, und eine Basisplatte (22), welche so ausgelegt ist, das sie den Kern (20) mit einer Struktur (12) zum Aufbringen der Druckkraft verbindet, umfasst, wobei der Kern (20) eine Schichtung aus mindestens einer Schicht (26) aus in der genannten Richtung ausgerichteten, eindirektionalen Fasern und aus Geweben (28,30) umfasst, wobei der Träger (18) Bruchinitiierungsmittel aufweist, so dass die Schicht (26) bei Aufbringung der Druckkraft belastet und progressiv beschädigt wird, **dadurch gekennzeichnet, dass** die Bruchinitiierungsmittel an einem Rand angrenzend an die Basisplatte (22) ausgebildete Ausschnitte (40) aufweisen, wobei die Ausschnitte (40) die Form von Sägezähnen aufweisen, die regelmäßig am Rand jeder Schicht (26) aus eindirektionalen Fasern in einer Beabstandung verteilt sind, die einen Teilbetrag desjenigen der im Schnitt durch den Kern (20) des Trägers (18) gebildeten Sinusform beträgt.

2. Verbundträger nach Anspruch 1, wobei auf der Basisplatte (22) auf beiden Seiten des Kerns (20) Klebeschichten aufgebracht sind, und die Bruchinitiierungsmittel ebenfalls die Klebeschichten aufweisen.

3. Verbundträger nach Anspruch 2, wobei die Basisplatte (22) zwei Eckleisten (32) umfasst, die auf beiden Seiten des Kerns (20) durch die Klebeschichten angebracht sind.

4. Verbundträger nach einem der Ansprüche 1 bis 3, wobei der Rand jeder Schicht (26) aus eindirektionalen Fasern in Bezug auf entsprechende Ränder (44) der Gewebe (28,30) zurückversetzt bzw. abgesetzt ist, und die Bruchinitiierungsmittel ebenfalls den Absatz (D) aufweisen.

5. Verbundträger nach einem der Ansprüche 1 bis 4, wobei die Sägezähne einen Winkel mit einem Scheitel von etwa 30° aufweisen.

6. Verbundträger nach einem der Ansprüche 1 bis 5, wobei die Spitzen (42) der Sägezähne in Bezug auf die Achse (46) der Sinusform maximal versetzt sind.

7. Verbundträger nach einem der Ansprüche 1 bis 6, wobei sich höchstens etwa 20% der Oberfläche der Sägezähne gegenüber der Basisplatte (22) befinden.

8. Verbundträger nach einem der Ansprüche 1 bis 7, wobei jede Schicht (26) eindirektionaler Fasern aus Kohlenstofffasern gebildet ist.

9. Verbundträger nach einem der Ansprüche 1 bis 8, wobei die Gewebe Aramid-Fasergewebe (28) umfassen, die mit ± 45° in Bezug auf die genannte Richtung ausgerichtet sind.

10. Verbundträger nach den Ansprüchen 8 und 9 in Kombination, wobei die Schicht(en) (26) aus eindirektionalen Kohlenstofffasern einen zentralen Teil des Kerns (20) des Trägers (18) bilden, und wobei sich der zentrale Teil zwischen zwei Aramid-Fasergeweben (26) befindet, so dass jede Schicht (26) mit mindestens einem von diesen in Kontakt steht.

11. Verbundträger nach einem der Ansprüche 1 bis 10, wobei die Gewebe Kohlenstoff-Fasergewebe (30) umfassen, die mit ± 45° in Bezug auf die genannte Richtung ausgerichtet sind.

12. Verbundträger nach Anspruch 11, wobei die Gewebe (30) aus Kohlenstofffasern an den Außenflächen des Kerns (20) des Trägers (18) angeordnet sind.

13. Luftfahrzeugrumpf mit einem Gerippe (10) und einer äußeren Verkleidung (12), die an diesem befestigt ist, wobei das Gerippe (10) Verstärkungsrahmen (14) umfasst, deren unterer, im wesentlichen geradliniger Abschnitt (14a) mit der äußeren Verkleidung (12) durch mindestens zwei gemäß einem der Ansprüche 1 bis 12 hergestellte Träger (18) verbunden ist.

## Claims

1. Composite beam to which a compression force can be applied in the direction of its depth, causing its rupture of the beam, the beam (18) comprises a web (20) with an approximately sinusoidal-shaped section in a place perpendicular to the said direction and a flange (22) adapted to connect the web (20) to a structure (12) through which the compression force is applied, the web (20) comprising a stack of at least one layer (26) of single-directional fibres oriented along the said direction, and fabrics (28, 30), the beam (18) comprising rupture initiation means, so that the layer (26) is progressively loaded and degraded during application of the said compression force, **characterized in that** said rupture initiation means comprise cutouts (40) formed on one edge of each layer (26) of single-directional fibres, adjacent to the flange (22), in which the cutouts (40) are sawtooth-shaped and are regularly distributed over the edge of each layer (26) of single-directional fibres at a pitch which is a submultiple of the pitch of the sine curve formed in section by the web (20) of beam (18).

2. Composite beam according to claim 1, in which the flange (22) is added onto each side of the web (20) by glue films, these glue films also forming part of the rupture initiating means.

3. Composite beam according to claim 2, in which the flange (22) comprises two angles (32) added onto each side of the web (20) by the said glue films.

4. Composite beam according to any one of claims 1 to 3, in which the said edge of each layer (26) of single-directional fibres is located set back from the corresponding edges (44) of the fabrics (28, 30), the said rupture initiating means also comprising the said set back (D).

5. Composite beam according to any one of the claims 1 to 4, in which the vertex angle of the saw teeth is equal to about 30°.

6. Composite beam according to any one of the claims 1 to 5, in which the points (42) of the saw teeth are then offset as much as possible from the centreline (46) of the sine curve.

7. Composite beam according to any one of the claims 1 to 6, in which not more than about 20% of the saw tooth surface is located facing the flange (22).

8. Composite beam according to any one of the claims 1 to 7, in which each layer (26) of single-directional fibres is formed from carbon fibres.

9. Composite beam according to any one of the claims 1 to 8, in which the fabrics comprise aramide fibre fabrics (28) oriented at ±45° with respect to the direction of the depth of the beam.

10. Composite beam according to claims 8 and 9 combined, in which the layer(s) of single-directional carbon fibres form a central part of the web (20) of the beam (18), the said central part being placed between two aramide fibre fabrics (26), such that each layer (26) is in contact with at least one of the fibre fabrics.

11. Composite beam according to any one of the claims 1 to 10, in which the fabrics comprise carbon fibre fabrics (30) oriented at ±45° with respect to the said direction.

12. Composite beam according to claim 11, in which the carbon fibre fabrics (30) are placed on the outside faces of the web (20) of the beam (18).

13. Aircraft fuselage, comprising a framework (10) to which an outer skin (12) is fixed, the framework (10) comprising stiffener frames (14) in which an approximately straight lower part (14a) is connected to the outer skin (12) by at least two beams (18) made according to any one of the claims 1 to 12.
